(19) Europäisches Patentamt

European Patent Office

Office européen des brevets

(11) **EP 1 696 535 A1**

(12) **EUROPÄISCHE PATENTANMELDUNG**

(43) Veröffentlichungstag:
 **30.08.2006 Patentblatt 2006/35**

(51) Int Cl.:
 *H02K 1/14* *(2006.01)*

(21) Anmeldenummer: **05028099.9**

(22) Anmeldetag: **21.12.2005**

(84) Benannte Vertragsstaaten:
 **AT BE BG CH CY CZ DE DK EE ES FI FR GB GR
 HU IE IS IT LI LT LU LV MC NL PL PT RO SE SI
 SK TR**
 Benannte Erstreckungsstaaten:
 **AL BA HR MK YU**

(30) Priorität: **23.02.2005 DE 102005008282**

(71) Anmelder: **MINEBEA Co., Ltd.
 Kitasaku-gun, Nagano-ken 3849-2100 (JP)**

(72) Erfinder: **Hans, Helmut, Dr.
 78112 Sankt Georgen (DE)**

(74) Vertreter: **Liesegang, Eva
 Forrester & Boehmert,
 Pettenkoferstrasse 20-22
 80336 München (DE)**

(54) **Bürstenloser Gleichstrommotor**

(57) Die Erfindung betrifft einen Gleichstrommotor mit einem Stator, der eine Vielzahl im wesentlichen radial angeordneter Statorhämmer aufweist, wobei jeweils zwei benachbarte Statorhämmer eine Statornut zur Aufnahme von Wick-lungen eingrenzen und wobei für jede Phase (U, V, W) des Gleichstrommotors jeweils wenigstens drei benachbarte Statornuten vorgesehen sind, wobei wenigstens eine erste der wenigstens drei Statornuten keine Wicklung aufnimmt und im Verhältnis zu wenigstens zwei zweiten der wenigstens drei Staturnuten verkleinert ist, um den Wickelraum der zwei zweiten Statornuten zu vergrößern, wobei die zwei zweiten Statornuten einander benachbart sind und Wicklungen einer Phase aufnehmen und die erste, freibleibende Statornut einen axialen Durchgang zur Kühlung des Stators bereit-stellt.

EP 1 696 535 A1

**Beschreibung**

Die Erfindung betrifft einen bürstenlosen Gleichstrommotor gemäß dem Oberbegriff von Patentanspruch 1.

In bürstenlosen Gleichstrommotoren sind ein drehbarer Rotor mit einem konstanten Magnetfeld sowie ein Stator, mit dem ein wechselndes Magnetfeld erzeugt werden kann, vorgesehen. Das rotierende Magnetfeld erzeugt ein Drehmoment, das nicht konstant ist. Vielmehr ergeben sich Schwankungen im Drehmoment, die von dem Aufbau des Rotors und des Stators und von deren Lage zueinander abhängen. Im Stand der Technik ist es bekannt, abhängig von gewünschten Motorparametern, wie Leistung des Motors, Rastmoment, Redundanz der Motorwicklungen etc., verschiedene Kombinationen von Stator-Nutzahl und Rotor-Polzahl zu wählen. Bei dreiphasigen Motoren ist standardmäßig jeweils ein Drittel der Nuten mit einer der Phasen U, V und W bewickelt. Die Anzahl der zu wickelnden Spulen entspricht somit der Anzahl der Nuten.

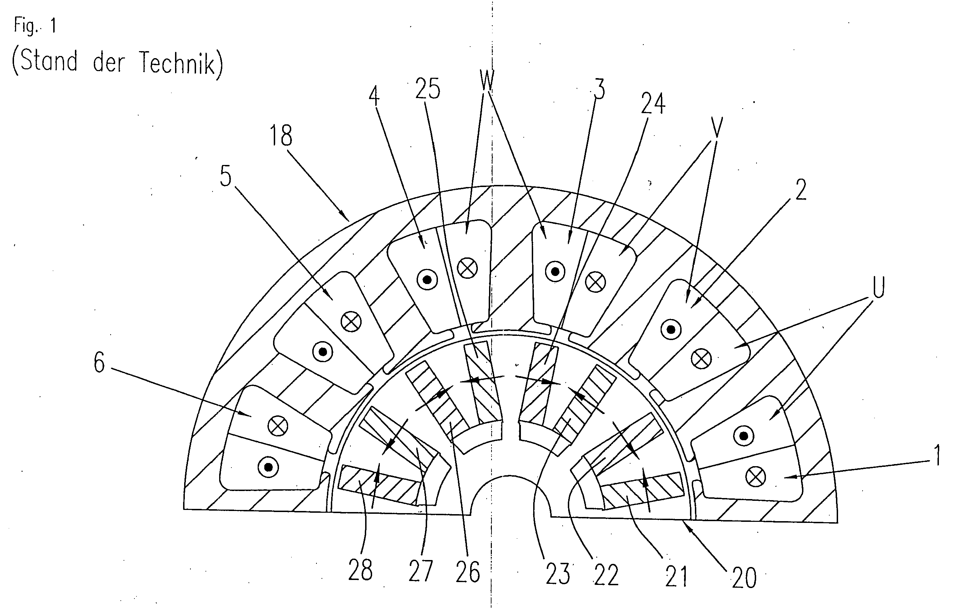

Fig. 1 zeigt beispielhaft einen Ausschnitt eines bürstenlosen Gleichstrommotors mit 12 StatorNuten und 16 Rotor-Polen. Der Motor umfaßt einen Stator 18 und einen Rotor 20. Das Wikkelschema eines solchen Motors ist ABCABCABCABC. Bei der Angabe des Wickelschemas bezeichnen Groß- und Kleinbuchstaben den Wickelsinn. Die Verwendung eines Großbuchstabens bedeutet z.B., daß der Wickelsinn im Uhrzeigersinn erfolgt, und ein Kleinbuchstabe bezeichnet dann eine Wickelrichtung gegen den Uhrzeigersinn. In Fig. 1 erkennt man auch, daß jede Nut Wicklungsanteile verschiedener Phasen enthält. In Fig. 1 sind die Nuten der dargestellten Motorhälfte mit 1 bis 6 numeriert. Die Nuten 1 und 2 tragen Wicklungsanteile der Phase U, die Nuten 2 und 3 tragen Wicklungsanteile der Phase V, die Nuten 3 und 4 tragen Wicklungsanteile der Phase W, die Nuten 4 und 5 tragen Wicklungsanteile der Phase U, etc.

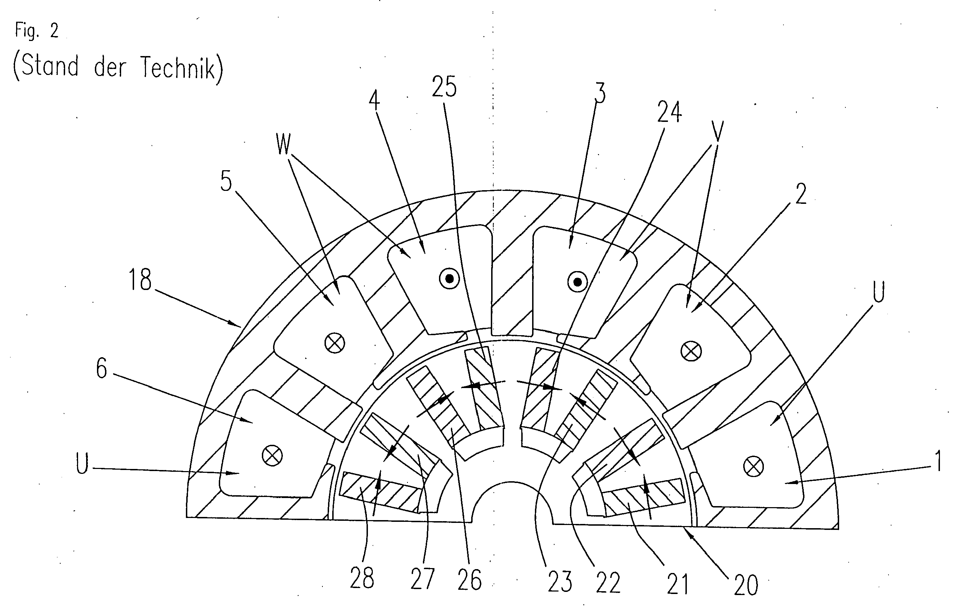

Ein solcher 12-nutiger Motor kann auch so gewickelt werden, daß nur sechs Spulen erforderlich sind und in einer Nut immer nur Spulenanteile einer Phase liegen. Dies ist in Fig. 2 dargestellt. Auch bei der in Fig. 2 gezeigten Motorhälfte sind die Nuten von 1 bis 6 numeriert, wobei die Nuten 1 und 6 Wicklungen der Phase U tragen, die Nuten 2 und 3 Wicklungen der Phase V und die Nuten 4 und 5 Wicklungen der Phase W tragen. Die Polschuhe sind an die andere Art der Bewicklung des Stators angepaßt. Da jede Phase nur noch halb so viele Spulen umfaßt wie nach dem eigentlichen Wickelschema vorgesehen, muß die Windungszahl pro Spule verdoppelt werden, so daß sich die Anzahl der Wicklungsdrähte in einer Nut nicht ändert. Dieses Wickelschema wird z.B. bei Wicklungen eingesetzt, die im Einzugs- oder Einlegeverfahren eingebracht werden.

In den Fig. 1 und 2 ist der Rotor 20 mit eingebetteten Permanentmagneten 21 bis 28 dargestellt, wobei die Magnetisierungsrichtung durch Pfeile gekennzeichnet ist.

Bei bürstenlosen Gleichstrommotoren hat somit die Anzahl der Nuten einen direkten Einfluß auf die Anzahl der Wicklungen oder Spulen, welche in die Nuten einzubringen sind. In Verbindung mit der Polzahl hat die Anzahl der Nuten auch einen Einfluß auf das Rastmoment (cogging torque) des Motors. Je größer das kleinste gemeinsame Vielfache von Polzahl und Nutzahl ist, desto kleiner ist das Rastmoment. Für einen Gleichstrommotor mit 12 Nuten und 16 Polen ergibt sich ein Rastmoment mit 48 Rastzyklen (cogging cycles) pro Umdrehung.

Die Aufgabe der Erfindung ist es, das Laufverhalten eines bürstenlosen Gleichstrommotors zu optimieren und dabei die Anzahl der Spulen nach Möglichkeit zu reduzieren.

Diese Aufgabe wird durch einen Gleichstrommotor mit den Merkmalen von Anspruch 1 gelöst.

Der Erfindung liegt die Erkenntnis zugrunde, daß sich für bestimmte Kombinationen von Nutzahl und Polzahl die Anzahl der Wicklungen bzw. Spulen reduzieren läßt, wobei freibleibende Nuten zur Kühlung des Gleichstrommotors verwendet werden können. Um die Motorleistung zu optimieren, werden diejenigen Nuten, welche Wicklungen enthalten, im Verhältnis zu den freibleibenden Nuten vergrößert. Wenn mehrere freibleibende Nuten nebeneinander liegen, so können diese gegebenenfalls zusammengefaßt werden, um in dem Stator einen größeren axialen Durchgang zur Kühlung des Stators zu schaffen und um die Gesamtnutzahl des Stators zu verändern, wodurch sich abhängig von der Polzahl des Rotors das Rastmoment beeinflussen läßt.

Die Erfindung ist auf solche Gleichstrommotoren anwendbar, deren Stator eine Vielzahl im wesentlichen radial angeordneter Statorhämmer aufweist, wobei jeweils zwei benachbarte Statorhämmer eine Statornut zur Aufnahme von Wicklungen eingrenzen. Dabei kann es sich um Innen- oder Außenläufermotoren, wie etwa zum Antrieb von Lüftern, handeln. Für jede Phase des Gleichstrommotors müssen standardmäßig wenigstens drei benachbarte Statornuten vorgesehen sein. Erfindungsgemäß werden diese Statornuten aufgeteilt in erste Statornuten, welche keine Wicklungen aufnehmen, und zweite Statornuten, welche Wickungen bzw. Spulen aufnehmen. Die Querschnittsfläche der ersten Statornuten ist im Verhältnis zur Fläche der zweiten Statornuten verkleinert. So wird für das Einbringen der Wicklungen ausreichend Wickelraum vorgesehen, wobei die freibleibenden Statornuten einen axialen Durchgang durch den Stator bilden und zur Kühlung des Stators genutzt werden können.

Die Erfindung ist bevorzugt anwendbar auf solche Gleichstrommotoren, bei denen eine ungerade Anzahl von aufeinanderfolgenden Nuten mit Spulen derselben Phase zu bewickeln sind. Hier ergeben sich durch die Konzentration der Wicklung auf weniger Statornuten, insbesondere auf zwei benachbarte Statornuten, Vorteile in fertigungstechnischer Hinsicht, weil das Bewickeln von zwei benachbarten Statornuten respektive des zwischen diesen liegenden Statorhammers deutlich einfacher ist als das Bewickeln von drei oder mehr benachbarten Statornuten für eine Phase.

Die Erfindung hat den weiteren Vorteil, daß sich durch die Konzentration der Wicklungen einer Phase auf weniger als die standardmäßig vorgesehenen Statornuten die Leistung des Motors erhöhen läßt. Werden die Wicklungen einer Phase beispielsweise auf zwei benachbarte Statornuten respektive den zwischen diesen liegenden Statorhammer konzentriert, so kann man diese so anordnen, daß bei z.B. einem 3-phasigen Motor jede Phase exakt um 120° elektrisch versetzt ist. In diesem Fall wird in jeder Windung die nahezu gleiche Spannung nach Betrag und Phase induziert, was zur maximalen induzierten Spannung Vi führt. Damit erreicht auch die im Motor in mechanische Leitung umgewandelte elektrische Leistung Vi * i einen Maximalwert.

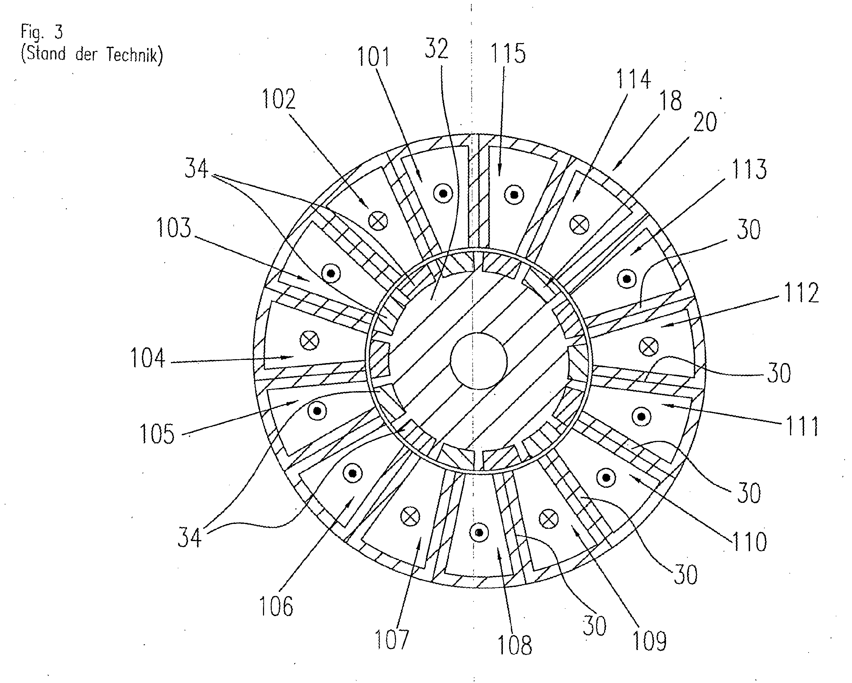

In einer Ausführung des erfindungsgemäßen Motors sind für jede Phase des Gleichstrommotors jeweils fünf benachbarte Statornuten vorgesehen. Ein solches Wickelschema ergibt sich beispielsweise bei einem Motor mit 15 Nuten und 14 Polen, wie in Fig. 3 dargestellt, und Vielfachen hiervon, also beispielsweise 30 Nuten und 28 Pole, etc. Das Wickelschema eines solchen Motors ist:

| Nut | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|
| Phase | A | a | A | a | A | B | b | B | b | B | C | c | C | c | C |

wobei Groß- und Kleinbuchstaben wiederum unterschiedlichen Wickelsinn angeben und die Buchstaben A, B, C den Phasen U, V, W zugeordnet sind.

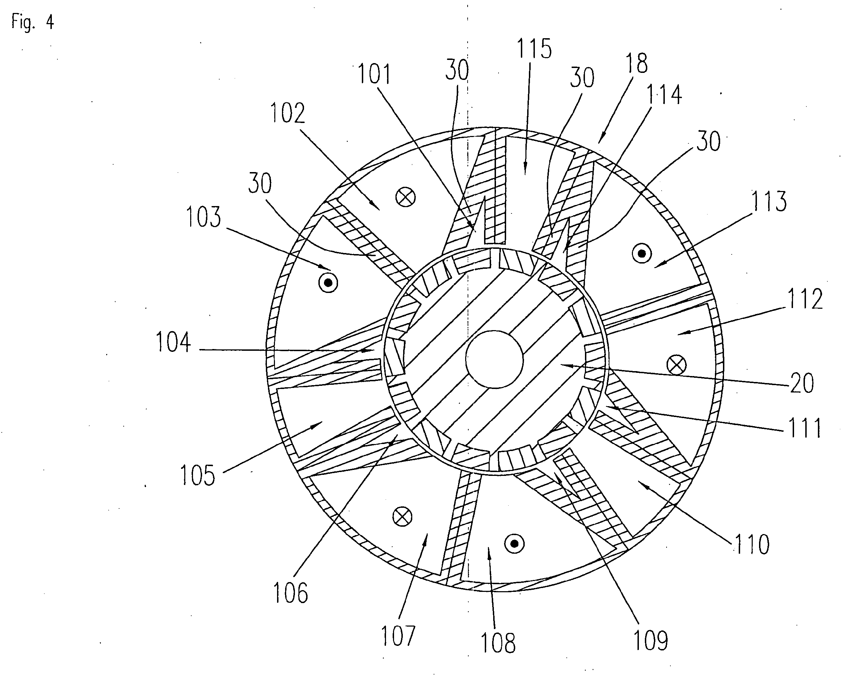

In einer bevorzugten Ausführung der Erfindung sind bei einem solchen Motor zwei benachbarte, vergrößerte Statornuten vorgesehen, welche Wicklungen aufnehmen, sowie zwei verkleinerte Statornuten, welche an die vergrößerten Statornuten angrenzen (vg. Fig. 4). Die fünfte Statornut der jeweils einer Phase zugeordneten benachbarten fünf Statornuten hat entweder Standardgröße, d.h. eine Nutgröße wie im Stand der Technik, oder sie ist ebenfalls verkleinert, um den Wickelraum der Statornuten, welche Wicklungen aufnehmen, weiter zu vergrößern. Diese fünfte Statornut nimmt ebenfalls keine Wicklungen auf und schafft dadurch einen weiteren axialen Durchgang zur Kühlung des Stators.

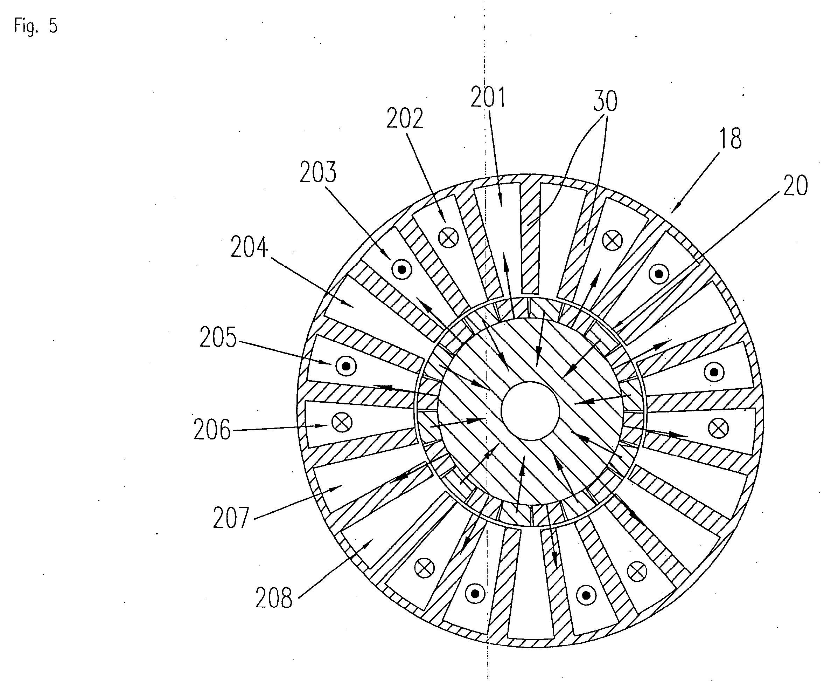

In einer anderen Ausführung der Erfindung sind für jede Phase des Gleichstrommotors jeweils sieben benachbarte Statornuten vorgesehen. Ein solches Wickelschema ergibt sich z.B. bei einem Gleichstrommotor mit 21 Nuten und 20 Polen (vgl. Fig. 5). Das Wickelschema für einen solchen Motor ist:

EP 1 696 535 A1

| Nut | 1 | 2 | 3 | 4 | 5 | 6 | 7 | 8 | 9 | 10 | 11 | 12 | 13 | 14 | 15 | 16 | 17 | 18 | 19 | 20 | 21 |
|---|---|---|---|---|---|---|---|---|---|---|---|---|---|---|---|---|---|---|---|---|---|
| Phase | A | a | A | a | A | a | A | B | b | B | b | B | b | B | C | c | C | c | C | c | C |

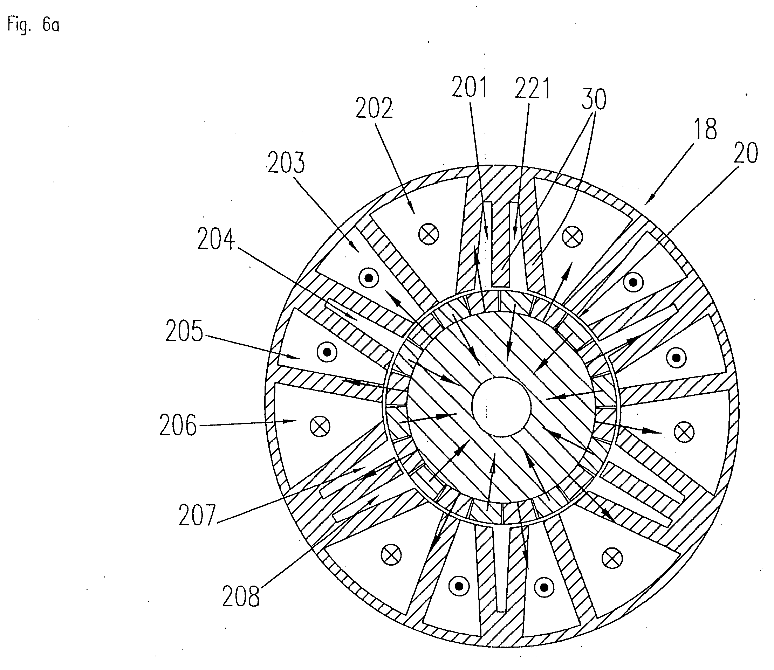

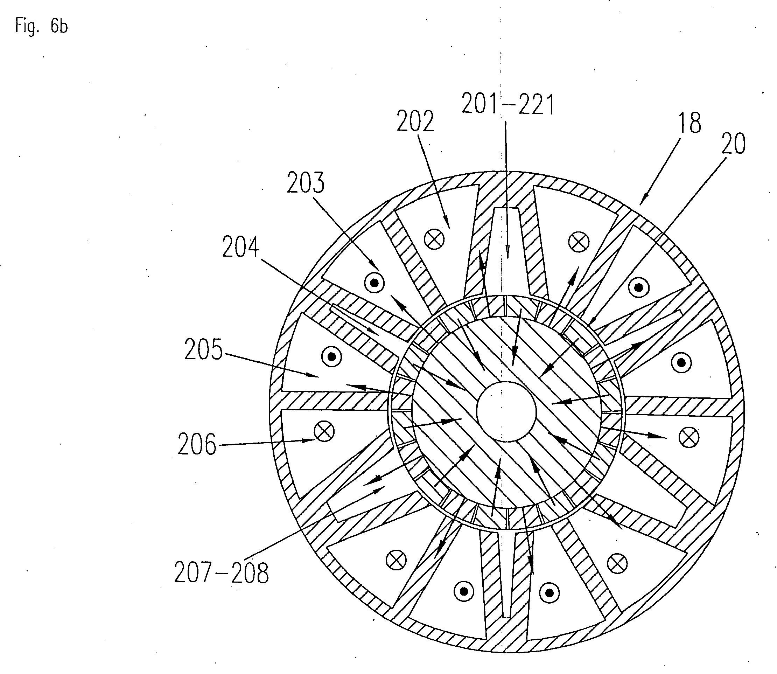

Erfindungsgemäß können bei einem solchen Motor die Wicklungen derart zusammengefaßt werden, daß die Wicklungen einer Phase auf zwei mal zwei benachbarte, vergrößerte Statornuten konzentriert werden, während die Statornuten zwischen und rechts und links von diesen vergrößerten Statornutpaaren frei bleiben (vgl. Fig. 6a). Die freibleibenden Statornuten können wieder dazu genutzt werden, einen axialen Durchgang zur Kühlung des Stators bereitzustellen. Bei dieser Anordnung kommen jeweils zwei verkleinerte Statornuten, welche unterschiedlichen Phasen zugeordnet sind, nebeneinander zu liegen. Wenn der Statorhammer zwischen diesen verkleinerten Statornuten entfernt wird, kann ein größerer axialer Durchgang zur Kühlung des Stators gebildet werden (vgl. Fig. 6b). Ferner wird dadurch das Verhältnis zwischen Nut- und Polzahl des Motors verändert, wodurch Einfluß auf das Rastmoment genommen werden kann.

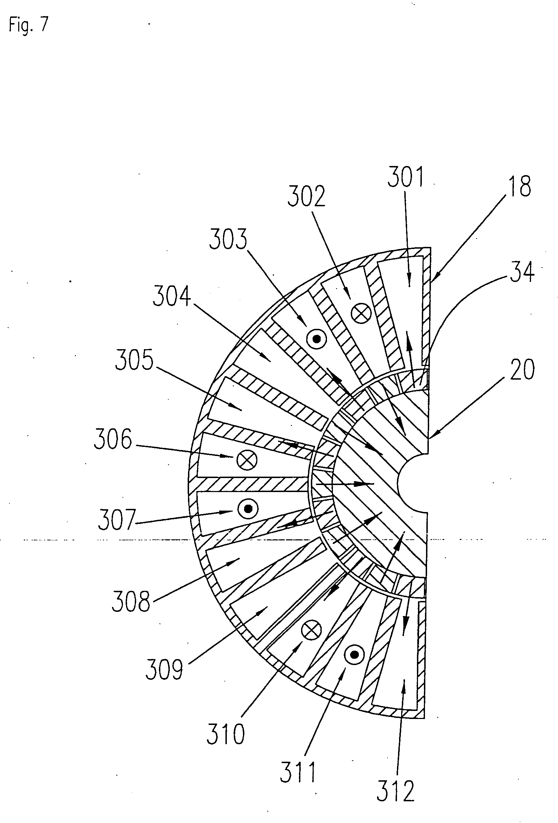

In einer weiteren Ausführung der Erfindung sind für jede Phase des Gleichstrommotors jeweils vier benachbarte Statornuten vorgesehen. Eine solche Anordnung ergibt sich beispielsweise bei einem Gleichstrommotor mit 24 Nuten und 22 Polen (vgl. Fig. 7). Das Wickelschema für diesen Motor ist:

EP 1 696 535 A1

| Nut | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 |
|-------|---|---|---|---|---|---|---|---|---|----|----|----|----|----|----|----|----|----|----|----|----|----|----|----|
| Phase | A | a | A | a | B | b | B | b | C | c | C | c | Z | z | Z | z | B | b | B | b | C | c | C | c |

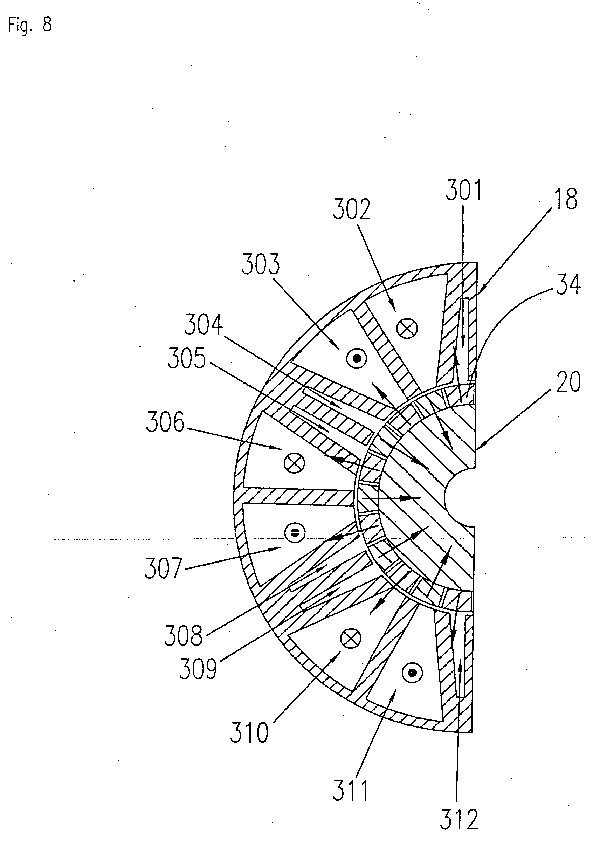

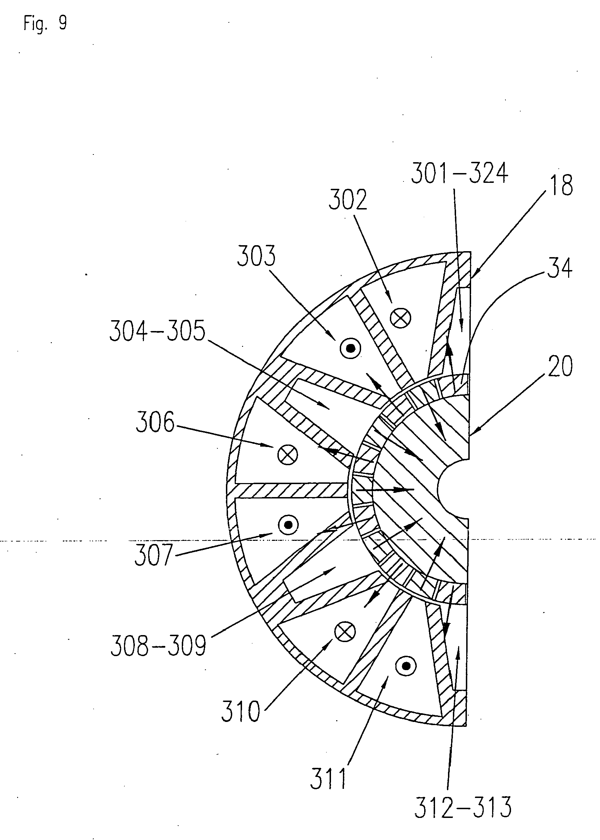

Bei dieser Ausführung der Erfindung nehmen vorzugsweise jeweils zwei benachbarte, vergrößerte Statornuten einer Phase, z.B. Nuten 2 und 3, Wicklungen auf, während die beidseits an diese angrenzenden Statornuten, z.B. Nuten 1 und 4, verkleinert sind und frei bleiben. Auch bei dieser Ausführung kommen jeweils zwei verkleinerte Statornuten, die unterschiedlichen Phasen zugeordnet sind, nebeneinander zu liegen (vgl. Fig. 8). Wenn der Statorhammer zwischen diesen verkleinerten Statornuten entfernt wird, kann ein größerer axialer Durchgang zur Kühlung des Stators gebildet werden. Dadurch wird auch das Verhältnis von Nutzahl zu Polzahl verändert, wobei der so veränderte Gleichstrommotor wie ein Motor mit 18 Nuten und 22 Polen wirkt (vgl. Fig. 9).

Der erfindungsgemäße Motor wird so ausgebildet, daß die Statorhämmer zwischen den verkleinerten und den vergrößerten Statornuten an ihren freien Enden Statorpole bilden, die in Umfangsrichtung dem Rotor zugewandt einen im wesentlichen gleichmäßigen Abstand voneinander haben.

Während hier bevorzugte Ausführungen des erfindungsgemäßen Motors mit vier, fünf und sieben benachbarten Statornuten, die jeweils einer Phase zugeordnet sind, erörtert wurden, ist die Erfindung hierauf nicht beschränkt, und andere Kombination von Pol- und Nutzahl liegen im Bereich der Erfindung. Grundsätzlich ist das Prinzip der Erfindung anwendbar auf Motoren, deren Nut- und Polzahl um eins oder zwei differieren. Dabei kann die Erfindung sowohl bei Innenläufern als auch bei Außenläufermotoren Anwendung finden.

Die Erfindung ist im folgenden anhand bevorzugter Ausführungen und mit bezug auf die Zeichnungen näher erläutert. In den Figuren zeigen:

Fig. 1     eine schematische Schnittdarstellung durch einen Teil eines Gleichstrommotors gemäß dem Stand der Technik;

Fig. 2     eine schematische Schnittdarstellung durch einen Teil eines Gleichstrommotors gemäß dem Stand der Technik, der eine Abwandlung des Motors der Fig. 1 ist;

Fig. 3     eine schematische Schnittdarstellung durch einen Gleichstrommotor gemäß dem Stand der Technik;

Fig. 4     eine schematische Schnittdarstellung durch einen Gleichstrommotor gemäß der Erfindung, der eine Abwandlung des Motors der Fig. 3 ist;

Fig. 5     eine schematische Schnittdarstellung durch einen Gleichstrommotor zur Erläuterung einer weiteren Ausführung der Erfindung;

Fig. 6a     eine schematische Schnittdarstellung durch einen Gleichstrommotor gemäß einer weiteren Ausführung der Erfindung, der eine Abwandlung des Motors der Fig. 5 ist;

Fig. 6b     eine schematische Schnittdarstellung durch einen Gleichstrommotor gemäß einer weiteren Ausführung der Erfindung, der ein Abwandlung des Motors der Fig. 6a ist;

Fig. 7     eine schematische Schnittdarstellung durch einen Teil eines Gleichstrommotors zur Erläuterung einer weiteren Ausführung der Erfindung;

Fig. 8     eine schematische Schnittdarstellung durch einen Teil eines Gleichstrommotors gemäß einer weiteren Ausführung der Erfindung, die eine Abwandlung des Motors der Fig. 7 ist;

Fig. 9     eine schematische Schnittdarstellung durch einen Teil eines Gleichstrommotors gemäß einer weiteren Ausführung der Erfindung, die eine Abwandlung des Motors der Fig. 8 ist.

Fig. 3 zeigt eine schematische Schnittdarstellung durch einen Gleichstrommotor mit 15 Nuten und 14 Polen gemäß dem Stand der Technik. In der Figur ist der Stator allgemein mit 18 und der Rotor mit 20 bezeichnet. Die Nuten des Stators sind von 101 bis 115 numeriert; sie werden durch zwischen den Nuten 101 bis 115 liegende Statorhämmer 30 eingegrenzt. Das Wikkelschema des in Fig. 3 gezeigten Motors ist:

| Nut | 101 | 102 | 103 | 104 | 105 | 106 | 107 | 108 | 109 | 110 | 111 | 112 | 113 | 114 | 115 |
|-------|-----|-----|-----|-----|-----|-----|-----|-----|-----|-----|-----|-----|-----|-----|-----|
| Phase | A | a | A | a | A | B | b | B | b | B | C | c | C | c | C |

wobei Groß- und Kleinbuchstaben unterschiedlichen Wickelsinn kennzeichnen. In Fig. 3 ist analog zu Fig. 2 ein Wickelprinzip gezeigt, bei dem alle Nuten 101 bis 115 nur Wicklungen bzw. Spulen enthalten, die zu ein und derselben Phasen gehören. Die Nuten 101 bis 105 enthalten Wicklungen der Phase U, die Nuten 106 bis 110 enthalten Wicklungen der Phase V und die Nuten 111 bis 115 enthalten Wicklungen der Phase W. Polschuhe, die an den freien Enden der Statorhämmer 30 normalerweise vorgesehen sind, sind in der Fig. 3 der Einfachheit halber nicht dargestellt.

Der Rotor 20 umfaßt einen Rotorkörper 32, der einen Rückschluß bilden kann, auf dessen Außenumfang 14 radial magnetisierte Permanentmagnete 34 aufgebracht sind. Alternativ kann auch ein entsprechend magnetisierter Ringmagnet auf den Rotorkörper 32 aufgebracht werden, um die 14 Rotorpole zu bilden, oder die Magnete können "embedded" im Rotor liegen. Der Rotor 20 ist in den Stator 18 koaxial eingefügt, wobei zwischen den Permanentmagneten 34 und dem Stator 18 ein Luftspalt gebildet ist.

Zur Herstellung des in Fig. 3 gezeigten Gleichstrommotors müssen sämtliche 15 Nuten bewickelt werden, um das bekannte Wickelschema zu realisieren. Die Kühlung des Gleichstrommotors kann nur durch Abfuhr von Wärme nach außen erfolgen. Der Motor erzeugt ein sehr geringes Rastmoment mit 15 x 14=210 Rastzyklen pro Umdrehung.

Fig. 4 zeigt eine schematische Schnittdarstellung durch einen Gleichstrommotor gemäß der Erfindung, der, ebenso wie der Motor der Fig. 3, 15 Nuten und 14 Rotorpole aufweist. Die Nuten 101 bis 105 sind der Phase U zugeordnet, die Nuten 106 bis 110 sind der Phase V zugeordnet, und die Nuten 111 bis 115 sind der Phase W zugeordnet. Der Rotor 20 ist identisch zu dem Motor der Fig. 3 aufgebaut.

Erfindungsgemäß sind von den jeweils fünf einer Phase zugeordneten Nuten zwei benachbarte Nuten 102, 103; 107, 108; 112, 113 vergrößert und die an diese angrenzenden Nuten 101, 104; 106, 109; 111, 114 entsprechend verkleinert. Die vergrößerten Nuten 102, 103; 107, 108; 112, 113 nehmen die Wicklungen der Phasen U, V, W auf, während die verkleinerten Nuten 101, 104; 106, 109; 111, 114 frei bleiben. Bei der gezeigten Ausführung bleiben auch die jeweils fünften Nuten 105, 110, 115 jeder einer Phase zugeordneten Gruppe von Nuten 101 bis 105, 106 bis 110, 111 bis 115 frei. Die freibleibenden Nuten 101, 104, 105, 106, 109, 110, 111, 114, 115 bilden axiale Durchgänge durch den Stator 18, welche zur Kühlung des Stators verwendet werden können. Beispielsweise bei Verwendung eines Ventilatorrades auf der Motorwelle können diese axialen Durchgänge zur besseren Wärmeabfuhr von Luft durchströmt werden. Auch die Verwendung eines anderen Kühlmediums als Luft ist bei geeigneter Ausgestaltung der Nuten denkbar.

Die Statorhämmer 30, welche die Nuten 101 bis 115 eingrenzen, sind so ausgebildet, daß die an ihren freien Enden gebildeten Statorpole im wesentlichen mit gleichem Abstand am inneren Umfang des Stators 18 verteilt sind. Weiterhin können an den dem Rotor zugewandten Enden der Statorpole Polschuhe angeordnet sein (nicht dargestellt).

Die Erfindung ermöglicht es, ein Gleichstrommotor, der nach dem Stand der Technik eine Vielzahl von Spulen benötigt, mit deutlich weniger Spulen oder Wicklungen zu realisieren, wodurch der Herstellungsaufwand erheblich reduziert wird. Gleichzeitig ermöglicht die Erfindung eine effektive Kühlung des Motors im Betrieb. Bei der gezeigten Ausführung werden z.B. anstelle von 15 Nuten nur 6 Nuten mit Wicklungen versehen, um einen Gleichstrommotor mit demselben Pol-Nutzahl-Verhältnis zu realisieren. Die Bewicklung jeweils eines einzelnen Statorhammers - nämlich zwischen den Nuten 102, 103, den Nuten 107, 108 und den Nuten 112, 113 - läßt sich deutlich einfacher realisieren als das in Fig. 3 gezeigte Wickelschema, bei dem für eine Phase fünf nebeneinanderliegende Nuten, z.B. 101 bis 105, bewikkelt werden müssen. Das in Fig. 3 gezeigte Wickelschema des Standes der Technik hat den zusätzlichen Nachteil, daß sich aufgrund der Verteilung der Wicklungen einer Phase auf fünf Nuten bzw. vier Statorhämmer eine elektrische Phasenverschiebung zwischen den zu einer Phase gehörenden Spulen ergibt. Diese Phasenverschiebung ist nachteilig, weil für einen optimalen Wirkungsgrad des Motors die Phasen eines 3-phasigen Motors um (theoretisch) exakt 120° elektrisch versetzt sein sollten. Die Phasenverschiebung ergibt sich bei Motoren des Standes der Technik daraus, daß die elektrische Periodenlänge durch die Länge eines magnetischen Polpaars gegeben ist, nämlich

$$\alpha_{pol} = \frac{360°}{Anzahl\ Polpaare}$$ · Die Nutteilung ist dagegen durch die Nutzahl gegeben: $$\alpha_{nut} = \frac{360°}{Anzahl\ Nuten}.$$

Mit Phase 1 als Referenz sollte also Phase 2 in der oder um die Nut $N_2$ konzentriert sein, die um 1/3 $\alpha_{pol}$ versetzt ist, es muß also gelten: $$N_2 * \alpha_{nut} = \frac{1}{3} \alpha_{pol}.$$ Entsprechend sollte Phase 3 konzentriert sein in oder um Nut $N_3$, so daß

gilt: $$N_3 * \alpha_{nut} = \frac{2}{3} \alpha_{pol}.$$ Dies kann durch die Erfindung erreicht werden.

Andere Pol-Nutzahl-Verhältnisse, die auf ähnliche Weise mit Bezug auf Fig. 4 beschrieben, realisiert werden können, sind das Vielfache der gezeigten Pol- und Nutzahl des Motors, also z.B. 30 Nuten mit 28 Polen etc.

Die Erfindung ist jedoch keinesfalls auf Pol-Nutzahl-Verhältnisse beschränkt, bei denen z.B. fünf oder sieben aufeinanderfolgende Nuten Wicklungen der gleichen Phase tragen.

Fig. 5 zeigt eine Schnittdarstellung durch einen Gleichstrommotor zur Erläuterung einer weiteren Ausführung der Erfindung. Der Motor umfaßt 21 Nuten und 20 Pole, wodurch sich das Wickelschema wie folgt ergibt:

| Nut | 201 | 202 | 203 | 204 | 205 | 206 | 207 | 208 | 209 | 210 |
|------|-----|-----|-----|-----|-----|-----|-----|-----|-----|-----|
| Phase | A | a | A | a | A | a | A | B | b | B |

| Nut | 211 | 212 | 213 | 214 | 215 | 216 | 217 | 218 | 219 | 220 | 221 |
|------|-----|-----|-----|-----|-----|-----|-----|-----|-----|-----|-----|
| Phase | b | B | b | B | C | c | C | c | C | c | C |

wobei die Nuten von 201 bis 221 numeriert sind.

In Fig. 5 ist gezeigt, daß bei einem solchen Motor, bei dem sieben aufeinanderfolgende Nuten 201 bis 207, Wicklungen jeweils der gleichen Phase, z.B. U, tragen, die Wicklungen dieser Phase U auf zwei Paare benachbarter Nuten 202, 203 und 205, 206 konzentriert werden können, während die angrenzenden Nuten 201, 204 und 207 frei bleiben. Entsprechendes gilt für die anderen Phasen V und W, die in Fig. 5 nicht im einzelnen beschriftet sind.

Fig. 6a zeigt, wie gemäß der Erfindung durch Vergrößerung bzw. Verkleinerung der Nuten 201 bis 207 und gleicher Spulenverteilung wie in Fig. 5 ein größerer Wickelraum erhalten werden kann. Die Nuten 202, 203; 205, 206; etc., welche Wicklungen enthalten, sind im Verhältnis zu den freibleibenden Nuten 201, 204, 207, 208 etc. deutlich vergrößert, wobei die freibleibenden Nuten axiale Durchgänge durch den Stator 18 bilden, welche zur Kühlung des Gleichstrommotors genutzt werden können.

Bei der in Fig. 6b gezeigten Ausführung, die der Fig. 6a weitgehend entspricht, sind jeweils die Polhämmer 30 weggelassen, die zwischen zwei freibleibenden Nuten, z.B. 207 und 208 liegen. Dadurch werden größere axiale Durchgänge durch den Stator 18 gebildet, die in Fig. 6b beispielhaft mit 201-221 und 207-208 bezeichnet sind. Der Durchgang 201-221 wird durch die erste und die einundzwanzigste Nut, der Durchgang 207-208 durch die siebte und die achte Nut gebildet, zwischen denen der Polhammer entfernt wurde.

Durch die Modifikation ändert sich auch das Rastmoment des Gleichstrommotors von 24 Rastzyklen pro Umdrehung in Fig. 6a auf 180 Rastzyklen pro Umdrehung in Fig. 6b.

Fig. 7 zeigt eine Schnittdarstellung durch einen Gleichstrommotor zur Erläuterung einer weiteren Ausführung der Erfindung. Der gezeigte Motor weist 24 Nuten und 22 Pole auf. Das Wickelschema eines solchen Motors ist:

| Nut | 301 | 302 | 303 | 304 | 305 | 306 | 307 | 308 | 309 | 310 | 311 | 312 |
|------|-----|-----|-----|-----|-----|-----|-----|-----|-----|-----|-----|-----|
| Phase | A | a | A | a | B | b | B | b | C | c | C | c |

| Nut | 313 | 314 | 315 | 316 | 317 | 318 | 319 | 320 | 321 | 322 | 323 | 324 |
|------|-----|-----|-----|-----|-----|-----|-----|-----|-----|-----|-----|-----|
| Phase | A | a | A | a | B | b | B | b | C | c | C | c |

In der Figur sind nur die Nuten 301 bis 312 einer Hälfte des Motors numeriert, wobei sich die Nutenfolge und das Wickelschema nach 180° wiederholen. Die Nuten 301 bis 304 sind einer Phase U, die Nuten 305 bis 308 einer zweiten Phase V und die Nuten 309 bis 312 einer dritten Phase W zugeordnet. Abweichend von einer Bewicklung der Nuten gemäß dem üblichen Wickelschema sind jedoch bei dem in Fig. 7 gezeigten Motor nur die Nuten 302 und 303 für die Phase U, die Nuten 306 und 307 für die Phase V und die Nuten 310 und 311 für die Phase W bewickelt, während die anderen Nuten 301, 304, 305, 308, 309, 312 frei bleiben. Dieses Wickelschema wiederholt sich in der zweiten Hälfte des Motors entsprechend.

Der Rotor 20 trägt auf seinem Außenumfang insgesamt 22 Magnete 34, deren Magnetisierungsrichtung durch Pfeile gekennzeichnet ist.

Fig. 8 zeigt, wie bei einem Gleichstrommotor, dessen Pol-Nutzahl-Verhältnis dem der Fig. 7 entspricht, der Wickelraum für die mit Spulen belegten Nuten 302, 303; 306, 307; 310, 311 usw. vergrößert werden kann, wobei die freibleibenden Nuten 301, 304, 305, 308, 309, 312 usw. entsprechend verkleinert werden. Die verkleinerten Nuten 301, 304, 305, 308, 309, 312 usw. bilden axiale Durchgänge durch den Gleichstrommotor und können zur Kühlung des Motors verwendet werden.

Fig. 9 zeigt eine Modifikation des Gleichstrommotors der Fig. 8, bei der die Statorhämmer zwischen zwei benachbarten freibleibenden Nuten, z.B. 1 und 24, 4 und 5, 8 und 9, 12 und 13, weggelassen sind, wodurch sich vergrößerte axiale Durchgänge 301-324, 304-305, 308-309 und 312-313 etc. ergeben. Bezüglich des Rastmoments verhält sich der modifizierte Motor der Fig. 9 wie ein Gleichstrommotor mit 18 Nuten und 22 Polen. Da das kleinste gemeinsame Vielfache von 18 und 22 gleich 198 ist, ergibt sich mit 198 Rastzyklen pro Umdrehung ein sehr geringes Rastmoment.

Die Erfindung sieht einen Gleichstrommotor vor, der für bestimmte Kombinationen von Pol-und Nutzahl bezüglich Kühlung und Anzahl der notwendigen Spulen optimiert werden kann. Durch die Reduzierung der Anzahl der insgesamt notwendigen Spulen kann der Motor mit geringerem Aufwand hergestellt werden. Der Wickelvorgang wird deutlich vereinfacht. Ferner ergibt sich durch die Konzentration der Spulen einer Phase der Vorteil, daß der Wirkungsgrad des Motors optimiert werden kann, weil eine elektrische Phasenverschiebung zwischen den zu einer Phase gehörenden Spulen vermieden wird. Die Erfindung ist auf all solchen Gleichstrommotoren anwendbar, bei denen standardmäßig drei oder mehr benachbarte Statornuten ein und derselben Phasen zugeordnet sind. Die Erfindung ist nicht auf die beschriebenen Kombinationen von Pol- und Nutzahl beschränkt.

Ferner ist die Erfindung nicht auf Innenläufermotoren beschränkt, sondern sie kann in analoger Weise auch für Außenläufermotoren, z.B. für Lüfter, Anwendung finden.

Die in der vorstehenden Beschreibung, den Ansprüchen und den Figuren offenbarten Merkmale können sowohl einzeln als auch in beliebiger Kombination für die Verwirklichung der Erfindung in ihren verschiedenen Ausführungsfbrmen von Bedeutung sein.

Bezugszeichenliste

| | |
|---|---|
| 18 | Stator |
| 20 | Rotor |
| 21,22,23,24,25,26,27,28 | Permanentmagnete |
| 30 | Statorhämmer |
| 32 | Rotorkörper |
| 34 | Permanentmagnete |
| 101-115 | Nuten |
| 201-221 | Nuten |
| 301-324 | Nuten |
| 201-221, 207-208 | Axiale Durchgänge |
| 301-324, 304-305, 308-309, 312-313 | Axiale Durchgänge |

**Patentansprüche**

1. Gleichstrommotor mit einem Stator (18), der eine Vielzahl im wesentlichen radial angeordneter Statorhämmer (30) aufweist, wobei jeweils zwei benachbarte Statorhämmer eine Statornut (101-115; 201-208; 301-312) zur Aufnahme von Wicklungen eingrenzen und wobei für jede Phase (U, V, W) des Gleichstrommotors jeweils wenigstens drei benachbarte Statornuten (101-105, 106-110, 111-115; 201-207; 301-304, 305-308, 309-312) vorgesehen sind, **dadurch gekennzeichnet, daß** wenigstens eine erste (101, 104, 106, 109, 111, 114; 201, 204, 207; 301, 305, 309) der wenigstens drei Statornuten (101-105, 106-110, 111-115; 201-207; 301-304, 305-308, 309-312) keine Wicklung aufnimmt und im Verhältnis zu wenigstens zwei zweiten (102, 103, 107, 108, 112, 113; 202, 203, 205, 206; 302, 303, 306, 307, 310, 311) der wenigstens drei Staturnuten verkleinert ist, um den Wickelraum der zwei zweiten Statornuten (102, 103, 107, 108, 112, 113; 202, 203, 205, 206; 302, 303, 306, 307, 310, 311) zu vergrößern, wobei die zwei zweiten Statornuten (102, 103, 107, 108, 112, 113; 202, 203, 205, 206; 302, 303, 306, 307, 310, 311) einander benachbart sind und Wicklungen einer Phase aufnehmen und die erste, freibleibende Statornut (101, 104, 106, 109, 111, 114; 201, 204, 207; 301, 305, 309) einen axialen Durchgang zur Kühlung des Stators (18) bereitstellt.

2. Gleichstrommotor nach Anspruch 1, **dadurch gekennzeichnet, daß** für jede Phase des Gleichstrommotors jeweils fünf benachbarte Statornuten (101-105, 106-110, 111-115) vorgesehen sind.

3. Gleichstrommotor nach Anspruch 2, **dadurch gekennzeichnet, daß** für jede Phase des Gleichstrommotors jeweils zwei benachbarte, vergrößerte zweite Statornuten (102, 103, 107, 108, 112, 113) Wicklungen aufnehmen und zwei verkleinerte erste Statornuten (101, 104, 106, 109, 111, 114) an die zweiten Statornuten angrenzen.

4. Gleichstrommotor nach Anspruch 3, **dadurch gekennzeichnet, daß** eine dritte Statornut (105, 110, 115) der fünf benachbarten Statornuten (101-105, 106-110, 111-115) eine Größe hat, die zwischen der Größe der ersten Statornuten (101, 104, 106, 109, 111, 114) und der Größe der zweiten Statornuten (102, 103, 107, 108, 112, 113) liegt, und keine Wicklung aufnimmt, um einen weiteren axialen Durchgang zur Kühlung des Stators (18) zu bilden.

5. Gleichstrommotor nach Anspruch 1, **dadurch gekennzeichnet, daß** für jede Phase des Gleichstrommotors jeweils sieben benachbarte Statornuten (201-207) vorgesehen sind.

6. Gleichstrommotor nach Anspruch 5, **dadurch gekennzeichnet, daß** für jede Phase des Gleichstrommotors jeweils zweimal zwei benachbarte, vergrößerte Statornuten (202, 203, 205, 206) Wicklungen aufnehmen und für jede Phase drei verkleinerte Statornuten (201, 204, 207) an die vergrößerten Statornuten angrenzen.

7. Gleichstrommotor nach Anspruch 6, **dadurch gekennzeichnet, daß** jeweils zwei verkleinerte Statornuten (207, 208, 201, 221), die unterschiedlichen Phasen zugeordnet sind, nebeneinander zu liegen kommen und der Statorhammer (30) zwischen diesen verkleinerten Statornuten (207, 208, 201, 221) entfernt ist, um einen größeren weiteren axialen Durchgang (201-221, 207-208) zur Kühlung des Stators zu bilden.

8. Gleichstrommotor nach Anspruch 1, **dadurch gekennzeichnet, daß** für jede Phase des Gleichstrommotors jeweils vier benachbarte Statornuten (301-304; 305-308, 309-312) vorgesehen sind.

9. Gleichstrommotor nach Anspruch 8, **dadurch gekennzeichnet, daß** für jede Phase des Gleichstrommotors jeweils zwei benachbarte, vergrößerte Statornuten (302, 303, 306, 307, 310, 311) Wicklungen aufnehmen und für jede Phase zwei verkleinerte Statornuten (301, 304, 305, 308, 309, 312) an die vergrößerten Statornuten angrenzen.

10. Gleichstrommotor nach Anspruch 9, **dadurch gekennzeichnet, daß** jeweils zwei verkleinerte Statornuten (304, 305; 308, 309), die unterschiedlichen Phasen zugeordnet sind, nebeneinander zu liegen kommen und der Statorhammer (30) zwischen diesen verkleinerten Statornuten entfernt ist, um einen größeren weiteren axialen Durchgang (301-324, 304-305, 308-309, 312-313) zur Kühlung des Stators zu bilden.

11. Gleichstrommotor nach einem der vorangehenden Ansprüche, **dadurch gekennzeichnet, daß** die Statorhämmer (30) zwischen den verkleinerten Statornuten (101, 104, 106, 109, 111, 114; 201, 204, 207; 301, 304, 305, 308, 309, 312) und den vergrößerten Statornuten (102, 103, 107, 108, 112, 113; 202, 203, 205, 206; 302, 303, 306, 307, 310, 311) so ausgebildet sind, daß sie an ihren freien, dem Rotor zugewandten Enden Statorpole bilden, die in Umfangsrichtung im wesentlichen einen gleichmäßigen Abstand voneinander haben.

Fig. 1
(Stand der Technik)

Fig. 2
(Stand der Technik)

EP 1 696 535 A1

Fig. 3
(Stand der Technik)

EP 1 696 535 A1

Fig. 4

16

Fig. 5

Fig. 6a

Fig. 6b

Fig. 7

Fig. 8

Fig. 9

Europäisches
Patentamt

**EUROPÄISCHER RECHERCHENBERICHT**

**Nummer der Anmeldung**

EP 05 02 8099

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | PATENT ABSTRACTS OF JAPAN Bd. 2003, Nr. 12, 5. Dezember 2003 (2003-12-05) -& JP 2004 304928 A (MITSUBA CORP), 28. Oktober 2004 (2004-10-28) * Zusammenfassung; Abbildungen 5,6 * ----- | 1,10 | INV. H02K1/14 |
| A | US 4 217 513 A (KOHZAI, YOSHINORI ET AL) 12. August 1980 (1980-08-12) * Abbildung 5 * ----- | 1 | |
| A | EP 0 289 292 A (THE SUPERIOR ELECTRIC COMPANY; DANA CORPORATION) 2. November 1988 (1988-11-02) * Abbildung 1 * ----- | 1 | |

RECHERCHIERTE
SACHGEBIETE (IPC)

H02K

Der vorliegende Recherchenbericht wurde für alle Patentansprüche erstellt

| Recherchenort | Abschlußdatum der Recherche | Prüfer |
|---|---|---|
| München | 29. Mai 2006 | Mayer-Martin, E-M |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
......................................................................................
& : Mitglied der gleichen Patentfamilie, übereinstimmendes
    Dokument

EPO FORM 1503 03.82 (P04C03)

**EP 1 696 535 A1**

**ANHANG ZUM EUROPÄISCHEN RECHERCHENBERICHT**
**ÜBER DIE EUROPÄISCHE PATENTANMELDUNG NR.**                    EP 05 02 8099

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-05-2006

| Im Recherchenbericht angeführtes Patentdokument | Datum der Veröffentlichung | Mitglied(er) der Patentfamilie | Datum der Veröffentlichung |
|---|---|---|---|
| JP 2004304928 A | 28-10-2004 | KEINE | |
| US 4217513 A | 12-08-1980 | CH 621894 A5 | 27-02-1981 |
| | | DE 2749999 A1 | 11-05-1978 |
| | | FR 2371082 A1 | 09-06-1978 |
| | | GB 1540983 A | 21-02-1979 |
| | | JP 53067015 U | 06-06-1978 |
| | | SU 812195 A3 | 07-03-1981 |
| EP 0289292 A | 02-11-1988 | DE 3877807 D1 | 11-03-1993 |
| | | DE 3877807 T2 | 27-05-1993 |
| | | JP 1060254 A | 07-03-1989 |
| | | JP 2594813 B2 | 26-03-1997 |
| | | US 4990809 A | 05-02-1991 |

EPO FORM P0461

Für nähere Einzelheiten zu diesem Anhang : siehe Amtsblatt des Europäischen Patentamts, Nr.12/82